# EUROPÄISCHE PATENTSCHRIFT

(11) **EP 3 186 302 B1**
(45) Veröffentlichungstag und Bekanntmachung des Hinweises auf die Patenterteilung: **26.09.2018**
(21) Anmeldenummer: 15762502.1
(22) Anmeldetag: 25.08.2015
(51) Int. Cl.: C08J 5/24, C08J 5/04, C08G 18/42

(54) **LICHTECHTE POLYURETHAN-PREPREGS UND DARAUS HERGESTELLTE FASERVERBUNDELEMENTE**
LIGHT-RESISTANT POLYURETHANE PREPREGS AND FIBRE COMPOUND ELEMENTS MADE FROM SAME
FEUILLES PRÉ-IMPRÉGNÉES EN POLYURÉTHANE INALTÉRABLES À LA LUMIÈRE ET ÉLÉMENTS EN FIBRES COMPOSITES ISSUS DE CELLES-CI

(30) Priorität: 29.08.2014 EP 14182765
(43) Veröffentlichungstag der Anmeldung: 05.07.2017
(73) Patentinhaber: Covestro Deutschland AG, 51373 Leverkusen (DE)
(72) Erfinder: SCHORNSTEIN, Marcel, 41462 Neuss (DE); HUPKA, Florian, 40589 Düsseldorf (DE); WEGENER, Dirk, 40789 Monheim (DE); RASSELNBERG, Harald, 41541 Dormagen (DE)
(74) Vertreter: Levpat
(86) Internationale Anmeldenummer: PCT/EP2015/069422
(87) Internationale Veröffentlichungsnummer: WO 2016/030359

(56) Entgegenhaltungen:
- WO-A1-2012/163845
- WO-A1-2013/139704
- WO-A1-2013/139705

## Beschreibung

Die vorliegende Erfindung betrifft lagerstabile Prepregs (preimpregnated fibers; vorimprägnierte Fasern) auf Basis lichtechter niedrigviskoser Polyurethansysteme mit erhöhter Kennzahl und daraus hergestellte flächige Faserverbundbauteile (Formkörper; Composite-Bauteile), die durch Imprägnierverfahren von z.B. Geweben und Gelegen erhältlich sind, sowie ein Verfahren zu deren Herstellung.

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen Nasslaminiertechnologie ("wet-lay-up"-Technologie) eingesetzt.

Industrielle Anwender solcher Systeme verlangen neben einem guten Handling, längere Lagerstabilitäten und Lichtechtheit auch schnellere Zykluszeiten sowie niedrige und energieeffiziente Aushärtetemperaturen der Prepregs.

Eine Voraussetzung dafür sind Matrixkomponenten, die die Herstellung lagerfähiger, für die Weiterverarbeitung hinreichend eigenschaftsstabiler Prepregs gestatten. Dazu ist es erforderlich, dass die Prepregs nicht klebend sind. Sie dürfen darüber hinaus nicht vollständig ausgehärtet sein. Die Harzmatrix darf lediglich vorpolymerisiert sein, das heißt, dass sie noch schmelzbar sein muss. Anforderungen an die vernetzte Harzmatrix bestehen in einer hohen Grenzflächenhaftung zu den Verstärkungsmaterialien und Einlagerungskomponenten und gegebenenfalls auch zu anderen Materialien, wie beispielsweise metallischen oder keramischen Materialien. Im vernetzten Zustand sind ferner hohe chemische Stabilität und Wärmeformbeständigkeit gefordert.

Neben Polyestern, Vinylestern und Epoxy-Systemen gibt es eine Reihe spezieller Harze im Bereich der vernetzenden Matrix-Systeme. Dazu zählen auch Polyurethan-Harze, die wegen ihrer Zähigkeit, Schadenstoleranz und ihrer Festigkeit beispielsweise zur Herstellung von Composite-Materialien über SRIM (structural reaction injection moulding)- oder Pultrusionsverfahren eingesetzt werden. Polyurethan-Composite weisen auch gegenüber Vinylestern, ungesättigten Polyesterharzen (UPE) oder UPE-Urethan-Hybrid-Harzen eine überlegene Zähigkeit auf.

Prepregs und daraus hergestellte Composite-Bauteile auf der Basis von Epoxy-Systemen werden zum Beispiel in WO 98/50211 beschrieben.

In WO 2006/043019 wird ein Verfahren zur Herstellung von Prepregs auf der Basis von Epoxidharz-Polyurethanpulvern beschrieben.

In DE-A 102010029355 wird ein Verfahren zur Herstellung von lagerstabilen Polyurethan-Prepregs und daraus hergestellte Formkörper beschrieben, die durch ein Direkt-Schmelze-Imprägnierverfahren von faserverstärkten Materialien unter Verwendung von reaktiven Polyurethanzusammensetzungen erhältlich sind. Die hierbei verwendeten, im Wesentlichen aliphatischen Polyisocyanate sind entweder intern blockiert (z.B. als Uretdion) und/oder mit externen Blockierungsmitteln blockiert. Die Reaktionsharzgemische sind bei Temperaturen zwischen 80 und 120°C im Direkt-Schmelz-Imprägnierverfahren anwendbar. Der Nachteil ist, dass die Aushärtetemperatur je nach System zwischen 120°C und 200°C liegt und die Aushärtezeit/Zykluszeit mit bis zu 60 Minuten sehr lang ist, was zu hohen Energie- und Herstellkosten führt. In den Beispielen wird mit einem Verlaufsadditiv gearbeitet, so dass davon auszugehen ist, dass die beschriebenen Systeme hohe Viskositäten besitzen.

WO 2013/139704 A1 beschreibt die Herstellung von lagerstabilen, aber dennoch reaktiven PUR-Prepregs durch Imprägnierung von Verstärkungsfasern mit einem sehr niedrigviskosen Polyurethansystem mit hoher Kennzahl. Diese Prepregs haben den Nachteil, dass sie für witterungsbeständige, lichtechte Anwendungen nicht geeignet sind. Ein weiterer Nachteil ist die Abhängigkeit der Verarbeitungszeit von der Masse der hergestellten Mischung. Eine Erhöhung der Masse der Mischung führt zu einer Reduzierung der Verarbeitungszeit (der offenen Topfzeit). Die offene Topfzeit ist die Zeit zwischen dem Mischen der Komponenten und dem Imprägnieren der Verstärkungsfasern mit dem noch nicht ausreagierten Matrixmaterial.

Des Weiteren sind Prepregs auf der Basis von pulverförmigen Thermoplasten als Matrix bekannt. In US-A 20040231598 wird eine Methode beschrieben, bei der die Partikel über eine spezielle Beschleunigungskammer mit elektrostatischer Aufladung geführt werden. Diese Apparatur dient zur Beschichtung von Glas-, Aramid- oder Kohlefaser-Substraten für die Herstellung von Prepregs aus thermoplastischen Harzen. Als Harze werden Polyethylen (PE), Polypropylen (PP), Polyetheretherketon (PEEK), Polyethersulfon (PES), Polyphenylsulfon (PPS), Polyimid (PI), Polyamid (PA), Polycarbonat (PC), Polyethylenterephthalat (PET), Polyurethan (PU), Polyester und Fluorpolymere genannt. Die daraus hergestellten thermoplastischen Prepreg-Textilien zeigen inhärente Zähigkeit, ein gutes, viskoelastisches Dämpfungsverhalten, eine unbegrenzte Lagerfähigkeit, gute Chemikalienbeständigkeit und Rezyklierbarkeit.

Composite-Bauteile mit einer Matrix auf Basis von 2-Komponenten-Polyurethanen (2-K-PUR) sind ebenfalls bekannt. Die Kategorie der 2-K-PUR umfasst im Wesentlichen die klassischen reaktiven Polyurethan-Harz-Systeme. Prinzipiell handelt es sich um ein System aus zwei getrennten Komponenten. Während der maßgebende Bestandteil der einen Komponente immer ein Polyisocyanat ist, sind dies bei der zweiten Komponente Polyole bzw. Amino- oder Amin-Polyol-Gemische. Beide Teile werden erst kurz vor der Verarbeitung miteinander vermischt. Danach erfolgt die chemische Aushärtung durch Polyaddition unter Bildung eines Netzwerkes aus Polyurethan bzw. Polyharnstoff. 2-K-PUR-Systeme haben nach dem Vermischen beider Bestandteile eine begrenzte Verarbeitungszeit ("Potlife"), da die einsetzende, exotherme Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalyse, Konzentration, Löslichkeit, Feuchtegehalt, NCO/OH-Verhältnis und Umgebungstemperatur sind die wichtigsten [Lackharze, Stoye/Freitag, Hauser-Verlag 1996, Seiten 210/212]. Der Nachteil der Prepregs auf der Basis derartiger 2-K-PUR-Systeme ist, dass nur eine kurze Zeit zur Verarbeitung des Prepregs zu einem Composite zur Verfügung steht. Deshalb sind derartige Prepregs nicht über mehrere Stunden oder sogar Tage lagerstabil.

In JP-A 2004196851 werden Composite-Bauteile beschrieben, die aus Carbonfasern und organischen Fasern, wie z. B. Hanf, unter Verwendung einer Matrix aus 2-K-PUR auf Basis von polymeren Methylendiphenyldiisocyanat (MDI) und speziellen OH-Gruppen haltigen Verbindungen hergestellt werden.

In WO 2003/101719 werden auf Polyurethan basierte Composite-Bauteile und Methoden zur Herstellung beschrieben. Es handelt sich um 2-K-Polyurethanharze mit definierten Viskositäten im Bereich von 300 bis 2000 mPas und bestimmten Gelzeiten von 3 bis 60 Minuten.

Bekannt sind auch physikalisch trocknende Systeme auf der Basis von nichtreaktiven PUR-Elastomeren. Es handelt sich hierbei um höhermolekulare, lineare, thermoplastische Polyurethane aus Diolen und Diisocyanaten, vorzugsweise MDI, TDI, HDI und IPDI. Solche thermoplastischen Systeme weisen in der Regel sehr hohe Viskositäten und damit auch sehr hohe Verarbeitungstemperaturen auf. Dies erschwert den Einsatz für Prepregs maßgeblich. Bei der Herstellung von Prepregs mit Faserverbünden ist der Einsatz von Pulvern bei reaktiven Systemen eher unüblich und beschränkt sich bislang auf wenige Einsatzgebiete.

Das wohl gängigste Verfahren, um ein Pulver auf eine Faseroberfläche zu bringen, ist das Wirbelbettverfahren (fluidized bed impregnation). Durch eine aufwärts gerichtete Strömung werden Pulverpartikel in einen Zustand versetzt, in dem sie fluid-ähnliche Eigenschaften aufweisen. Dieses Verfahren wird in EP-A 590702 angewandt. Dabei werden die Stränge einzelner Faserbündel auseinander geflochten und im Wirbelbett mit dem Pulver beschichtet. Das Pulver besteht dabei aus einer Mischung aus reaktivem und thermoplastischem Pulver, um so die Eigenschaften der Matrix zu optimieren. Einzelne Rovings (Faserbündel) werden schließlich zusammengelegt und mehrere Lagen bei einem Druck von 16 bar für etwa 20 Minuten verpresst. Die Temperaturen variieren zwischen 250 und 350 °C. Häufig kommt es allerdings beim Wirbelbettverfahren zu unregelmäßiger Beschichtung, insbesondere wenn die Stränge nicht vollständig auseinander gezogen werden.

Diesbezüglich wird in US-A 20040231598 eine Methode vorgestellt, die ähnlich dem Wirbelbettverfahren funktioniert. Dabei transportiert ein Luftstrom die Partikel zum Substrat, und es erfolgt durch einen speziellen Aufbau eine gleichmäßige Abscheidung des Pulvers.

In DE-A 102009001793 und DE-A 102009001806 wird ein Verfahren zur Herstellung von lagerstabilen Prepregs, im Wesentlichen aufgebaut aus mindestens einem faserförmigen Träger und mindestens einer reaktiven pulverförmigen Polyurethanzusammensetzung als Matrixmaterial, beschrieben.

In WO 2012/022683 werden Faserverbundbauteile und ein Verfahren zu deren Herstellung beschrieben. Das Polyurethan, mit dem die Faserschicht getränkt ist, wird aus einem Reaktionsgemisch hergestellt. Das Reaktionsgemisch enthält neben Polyisocyanaten, Polyolen und gegebenenfalls Additiven als wesentlichen Bestandteil ein oder mehrere Polyepoxide. Das in diesem Dokument beschriebene Polyurethan hat den Nachteil einer für die Herstellung von Prepregs nicht ausreichenden Lagerstabilität, charakterisiert z.B. durch eine niedrige Glasübergangstemperatur. Darüber hinaus weist dieses PUR-System nicht den für eine Nachvernetzung zu fertigen Bauteilen erforderlichen NCO-Wert auf.

Die Aufgabe der vorliegenden Erfindung war es, ein Matrixmaterial zu finden, das im Vergleich zu aromatischen PUR-Prepreg-Systemen eine bessere Lichtechtheit zeigt, eine sehr niedrige Anfangsviskosität besitzt, um eine gute Benetzung des faserförmigen Trägers zu gewährleisten, und das eine genügend lange Verarbeitungszeit zwischen dem Mischen der Komponenten und dem Imprägnieren der Verstärkungsfasern mit dem noch nicht ausreagierten Matrixmaterial aufweist. Eine weitere Aufgabe der Erfindung war es, Prepregs zur Verfügung zu stellen, die mittels eines einfachen Verfahrens hergestellt werden können, mehrere Wochen lagerstabil sind, niedrige Aushärtetemperaturen besitzen und schnell aushärten, um kurze Zykluszeiten zu erhalten. Darüber hinaus sollen die Prepregs nur leicht klebrig sein, um sie einfach weiter verarbeiten zu können.

Überraschend wurde gefunden, dass die Herstellung von lichtechten, lagerstabilen, aber dennoch reaktiven Prepregs durch Imprägnierung von Verstärkungsfasern mit einem niedrigviskosen aliphatischen Polyurethansystem gelingt. Die erfindungsgemäßen Prepregs weisen verbesserte Herstellungs- und Verarbeitungseigenschaften sowie schnellere Zykluszeiten gegenüber den z.B. in DE-A 102010029355 (WO 2011/147688 A1) und in WO 2013/139704 Albeschriebenen Prepregs auf.

Gegenstand der Erfindung sind daher Prepregs enthaltend eine flächige Faserschicht, die mit nicht vollständig ausgehärtetem Polyurethan (Matrixmaterial) mit einem NCO-Wert von 3 Gew.-% bis 17 Gew.-% (gemessen nach DIN EN ISO 14896:2009-07-Verfahren A: Verfahren A = NCO-Wertbestimmung mittels Titration) und mit einem T_{g}-Wert von unter 40°C, bevorzugt von maximal 35°C (Glasübergangstemperatur T_{g} gemessen nach DIN EN ISO 53765-A-20) getränkt ist, wobei das Polyurethan erhältlich ist aus einem Reaktionsgemisch bestehend aus einer Isocyanatkomponente aus
A) einem oder mehreren organischen Isocyanaten aus der Gruppe bestehend aus unblockierten aliphatischen oder cycloaliphatischen Di- und Polyisocyanaten, deren polymere Homologen, aus deren Isocyanuraten sowie Abmischungen daraus,
   und einer Polyolformulierung aus
B) einer Polyolkomponente aus einem oder mehreren Polyolen, bevorzugt aus einem oder mehreren Polyesterpolyolen, mit einer zahlenmittleren OH-Zahl von 30 bis 1000 mg KOH/g, einer zahlenmittleren Funktionalität von 1,9 bis 2,5,
C) einem oder mehreren Dianhydrohexitolen,
D) einem oder mehreren latenten Katalysatoren, die bei Temperaturen von 50° bis 100°C katalytisch wirksam sind,
E) gegebenenfalls Hilfs- und/oder Zusatzstoffen, ausgenommen Polyepoxide,
wobei das Reaktionsgemisch bei 40°C eine anfängliche Viskosität von 2300 bis 3200 mPas (gemessen nach DIN EN ISO 53019), bevorzugt 2400 bis 3000 mPas, besonders bevorzugt 2500 bis 2850 mPas aufweist und das Verhältnis der Anzahl der NCO-Gruppen der Komponente A) zu der Anzahl der OH-Gruppen der Komponente B) und C) von 1,3:1 bis 10:1, bevorzugt von 1,4:1 bis 5,7:1 ist.

Der NCO-Wert des nicht vollständig ausgehärteten Polyurethans gibt den Gewichtsanteil an nicht reagierten Isocyanatgruppen im Prepreg an. Dieser NCO-Wert ist außerdem ein Indiz für die Lagerstabilität der Prepregs. Zur Bestimmung der Lagerstabilität der Prepregs wird der NCO-Wert über einen Zeitraum von mehreren Wochen bestimmt.

Der NCO-Wert der lagerstabilen Prepregs wird wöchentlich über einen Zeitraum von 7 Wochen bestimmt. Der NCO-Wert der erfindungsgemäßen Prepregs liegt in einem Bereich von 3 Gew.-% bis 17 Gew.-%, bevorzugt von 4 Gew.-% bis 15 Gew.-% und ganz besonders bevorzugt von 4,5 Gew.-% bis 12 Gew.-%. Der NCO-Wert der erfindungsgemäßen Prepregs ändert sich, auch ohne Zusatz von externen Blockierungsmitteln beziehungsweise sogenannten Stoppern, über einen Zeitraum von 7 Wochen um weniger als 4,5%. Der NCO-Wert wird nach DIN EN ISO 14896:2009-07-Verfahren A bestimmt.

Ein weiterer Gegenstand der Erfindung sind flächige Faserverbundbauteile enthaltend mindestens ein erfindungsgemäßes Prepreg, wobei das bzw. die Prepregs vollständig ausgehärtet ist bzw. sind.

Bevorzugt sind flächige Faserverbundbauteile, die zusätzlich zu der erfindungsgemäßen Prepregschicht noch eine Prepregschicht aufweisen, die aus einer flächigen Faserschicht und einem vollständig ausgehärteten Polyurethan auf Basis von aromatischen Isocyanaten besteht.

Ein weiterer Gegenstand der vorliegenden Erfindung ist ein Verfahren zur Herstellung der erfindungsgemäßen Prepregs, welches dadurch gekennzeichnet ist, dass
i) die Komponenten B) bis E) bei Temperaturen von 40° bis 80°C, vorzugsweise von 50° bis 70°C, zur Herstellung einer Polyolformulierung X gemischt werden,
ii) die Polyolformulierung X aus Schritt i) mit der Komponente A) bei Temperaturen zwischen 10° und 80°C zur Herstellung einer Reaktivmischung vermischt wird,
iii) die Reaktivmischung aus ii) auf eine flächige Faserschicht aufgetragen wird und teilweise härtet.

Die Faserschicht wird also mit der Reaktivmischung imprägniert.

Ein weiterer Gegenstand der Erfindung ist ein Verfahren zur Herstellung der erfindungsgemäßen Faserverbundbauteile, welches dadurch gekennzeichnet ist, dass
ein oder mehrere erfindungsgemäß hergestellte Prepregs bei 110° bis 140°C und einem Druck von 1 bis 100 bar, bevorzugt von 1 bis 50 bar, besonders bevorzugt von 1 bis 10 bar oder unter Vakuum innerhalb von 1 bis 10 Minuten, bevorzugt von 1 bis 5 Minuten vollständig ausgehärtet werden.

Die Viskositäten werden nach DIN EN ISO 53019 (Platte/Platte) bestimmt.

Die erfindungsgemäßen Prepregs bzw. die daraus hergestellten Faserverbundbauteile können zur Herstellung von Sandwichbauteilen, welche aus Kernlagen und Deckschichten bestehen, für Leichtbaulösungen in unterschiedlichen Anwendungen im Bereich der Bau-, der Automobil- (z.B. Karosseriebauteile), der Luft- und Raumfahrtindustrie (z.B. Flugzeugbau), des Strassenbaus (z.B. Kanaldeckel), der Energietechnik (z.B. Rotorblätter von Windkraftanlagen, Solarspiegeln), im Boots- und Schiffsbau und in hochbelasteten Strukturen sowie in der Baypreg®-Technologie eingesetzt werden. Für die Herstellung der genannten Sandwichbauteile ist es auch möglich, Prepregs auf Basis von flächigen Faserschichten und nicht vollständig ausgehärteten Polyurethanen auf Basis von aromatischen Isocyanatkomponenten einzusetzen. Auch Kombinationen aus den erfindungsgemäßen Prepregs mit Prepregs auf Basis von flächigen Faserschichten und nicht vollständig ausgehärteten Polyurethanen auf Basis von aromatischen Isocyanatkomponenten können zur Herstellung von Faserverbundbauteilen eingesetzt werden.

Das Prinzip des Imprägnierverfahrens zur Herstellung der Prepregs besteht darin, dass zunächst eine reaktive Polyurethanzusammensetzung aus den einzelnen Komponenten A), B), C), D) und E) hergestellt wird. Die Komponenten B), C), D) und E) werden zuvor bei 40 bis 80 °C zu einer Polyolformulierung vermischt. Anschließend wird das homogene Gemisch bei Temperaturen unterhalb von 80 °C (vorzugsweise von 10° bis 75°C) mit der Komponente A) vermischt. Diese reaktive Polyurethanzusammensetzung wird dann direkt bei Raumtemperatur auf den faserförmigen Träger (flächige Faserschicht) aufgebracht, das heißt, es erfolgt eine Imprägnierung des faserförmigen Trägers mit dem hergestellten Polyurethansystem aus A), B), C), D) und E). Danach können die lagerfähigen Prepregs zu einem späteren Zeitpunkt zu Faserverbundbauteilen weiterverarbeitet werden. Durch das erfindungsgemäße sehr niedrigviskose Polyurethansystem erfolgt eine sehr gute Imprägnierung des faserförmigen Trägers. Eine weitere Vernetzungsreaktion durch thermische Belastung der Polyurethanzusammensetzung wird durch das Arbeiten bei Raumtemperatur vermieden. Bei der Imprägnierung können unterschiedliche Varianten angewendet werden. Das Polyurethansystem kann z.B. in einem Walzenstuhl oder mittels eines Rakels aufgebracht werden.

Ein Vorteil der erfindungsgemäß eingesetzten Reaktionsmischungen ist das Vermischen der Komponente A) mit dem Gemisch aus B), C), D) und E) bei niedrigen Temperaturen von 10°C bis 80°C, bevorzugt von 20°C bis 60°C und besonders bevorzugt von 20°C bis 40°C, so dass ein Aufbau von Exothermie auch bei einer größeren Masse des Polyurethansystems vermieden werden kann und das Reaktionsgemisch niedrigviskos bleibt und somit gut auf das Trägermaterial aufgebracht werden kann. Bei den bisherigen Systemen auf aliphatischer Basis müssen die Komponenten bei Temperaturen zwischen 80°C und 120°C vermischt werden, was durch Anreagieren des reaktiven Matrixmaterials problematisch ist. Im Fall der aromatischen Systeme führt die Erhöhung der Masse der Polyurethanmatrix zu einer Reduzierung der offenen Topfzeit bzw. Verarbeitungszeit (Zeit zwischen dem Mischen der Komponenten und dem Imprägnieren der Verstärkungsfasern mit dem noch nicht ausreagierten Matrixmaterial).

Die erfindungsgemäß eingesetzten Reaktionsmischungen benötigen im Gegensatz zu den in DE-A 102010029355 verwendeten Reaktionsmischungen weder externe Blockierungsmittel noch blockierte Isocyanatkomponenten. Mit den erfindungsgemäß eingesetzten Reaktionsmischungen sind ein schnelles Aushärten der Prepregs bei niedrigen Temperaturen und eine schnelle Fertigung der Faserverbundbauteile möglich.

Die erfindungsgemäß eingesetzte Reaktionsmischung kann auf Gießmaschinen mit Statikmischern oder mit dynamischen Mischern hergestellt werden, da nur eine kurze Mischzeit benötigt wird.

Dies ist bei der Herstellung der erfindungsgemäßen Faserverbundbauteile von großem Vorteil, da die Reaktivharzmischung für eine gute Tränkung möglichst dünnflüssig sein muss. Eine Mischung, die erst vorab für einige Minuten vermischt werden muss, zeigt durch die Bildung von Urethangruppen bereits eine zu hohe Viskosität.

Die erfindungsgemäß hergestellten Prepregs weisen nach Abkühlung eine sehr hohe Lagerstabilität von mehreren Wochen auf. Die so hergestellten Prepregs sind nur leicht klebrig und können daher einfach weiterverarbeitet werden.

In DE-A 102010029355 wird die Zugabe eines Verlaufsadditivs beschrieben, so dass davon auszugehen ist, dass die Reaktionsharzsysteme eine hohe Viskosität aufweisen. Die erfindungsgemäßen Polyurethansysteme weisen niedrige Viskositäten von 2300 bis 3200 mPas bei 40 °C auf, so dass eine Zugabe von Verlaufsadditiven nicht notwendig ist und trotzdem eine gute Tränkung der Fasern vorliegt.

Ein weiterer Vorteil der erfindungsgemäß eingesetzten Reaktionssysteme ist, dass beim Einsatz von aliphatischen Polyisocyanaten eine deutlich erhöhte Lichtechtheit vorliegt.

Die Prepregs können in Form einer Schicht und in Form mehrerer über einander liegender Schichten zu einem Faserverbundbauteil verarbeitet werden. Vor der Vernetzung des Matrixmaterials werden die Prepregs vorzugsweise zugeschnitten, gegebenenfalls vernäht oder anderweitig fixiert und in einer geeigneten Form unter Druck, drucklos, gegebenenfalls unter Anlegen von Vakuum verpresst. Im Rahmen der vorliegenden Erfindung erfolgt dieser Vorgang der Herstellung der Faserverbundbauteile aus den Prepregs je nach Aushärtungszeit bei Temperaturen unterhalb von 140 °C, bevorzugt von 60° bis 140°C, besonders bevorzugt von 70°C bis 135°C.

Während der Verarbeitung der Prepregs zu den Faserverbundbauteilen (z. B. durch Verpressen bei erhöhten Temperaturen) erfolgt durch Aufschmelzen des zunächst anreagierten Matrixmaterials zu einer niedrigviskosen Polyurethanzusammensetzung eine sehr gute Imprägnierung des faserförmigen Verstärkungsmaterials, bevor durch die vollständige Vernetzungsreaktion der Polyurethanzusammensetzung bei erhöhten Temperaturen die komplette Polyurethanmatrix durchhärtet. Vorzugsweise wird die Werkzeugkavität der Form vor dem Verpressen des Prepregs mit einem Trennmittel versehen. Es können weitere Schutz- oder Dekor-Schichten vor dem Einbringen des Fasermaterials zur Herstellung des Prepregs in das Werkzeug eingetragen werden, wie beispielsweise eine oder mehrere Gelcoatschichten.

Besonders bevorzugt ist ein Faserverbundbauteil, welches in der Faserschicht ein Polyurethan aufweist, das aus 59-92 Gew.-%, bevorzugt 61-86,5 Gew.-% unblockierten Polyisocyanaten (A), 5-26 Gew.-%, bevorzugt 8,5-24,5 Gew.-% Polyolen (B), 2,6-12,7 Gew.-%, bevorzugt 4,2-12,3 Gew.-% Dianhydrohexitolen (C), 0,3-1,8 Gew.-%, bevorzugt 0,6-1,7 Gew.-% Katalysator (D) und 0-3 Gew.-%, bevorzugt 0,1-0,5 Gew.-% Additiven (E) erhältlich ist, wobei die Summe der Gewichtsanteile der Komponenten 100 Gew.-% ergibt.

Der Faseranteil im Faserverbundteil beträgt vorzugsweise mehr als 45 Gew.-%, besonders bevorzugt mehr als 50 Gew.-%, bezogen auf das Gesamtgewicht des Faserverbundbauteils.

Als Isocyanatkomponente A) kommen die üblichen unblockierten aliphatischen und cycloaliphatischen Di- und/oder Polyisocyanate zum Einsatz. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts. Vorzugsweise können auch Isocyanurate aus HDI oder aus IPDI und/oder deren Homologen, sowie Abmischungen aus diesen Isocyanuraten eingesetzt werden. Der NCO-Gehalt des verwendeten Polyisocyanates sollte vorzugsweise über 15 Gew.-%, bevorzugt über 20 Gew.-% liegen. Die Viskosität des Isocyanates sollte vorzugsweise ≤ 35000 mPas (bei 25°C), bevorzugt ≤ 32000 mPas (bei 25°C) und besonders bevorzugt von ≤ 30000 mPas (bei 25°C) sein.

Die OH-Zahl der Komponente B) gibt im Falle eines einzelnen zugesetzten Polyols dessen OH-Zahl an. Im Falle von Mischungen wird die OH-Zahl der Mischung angegeben. Dieser Wert kann anhand von DIN EN ISO 53240 bestimmt werden.

Die Polyolkomponente (Polyol oder Polyolgemisch) B) weist eine mittlere OH-Zahl von 30 bis 1000 mg KOH/g, bevorzugt von 50 bis 300 mg KOH/g und besonders bevorzugt von 60 bis 250 mg KOH/g auf. Bevorzugt hat die eingesetzte Polyolkomponente eine mittlere Funktionalität von 1,9 bis 2,5.

Erfindungsgemäß können als Polyolkomponente B) Polyetherpolyole, Polyesterpolyole oder Polycarbonatpolyole eingesetzt werden, bevorzugt sind Polyesterpolyole. Erfindungsgemäß verwendbare Polyesterpolyole sind beispielsweise Kondensationsprodukte von 1,4-Butandiol, Ethylenglycol und Adipinsäure.

Die Polyolkomponente B) kann auch Fasern, Füllstoffe und Polymere enthalten.

Dianhydrohexitole können beispielsweise durch zweifache Wasserabspaltung aus Hexitolen, wie z.B. Mannitol, Sorbitol und Iditol, hergestellt werden. Diese Dianhydrohexitole sind unter den Namen Isosorbid, Isomannid und Isoidid bekannt und haben folgende Formel:

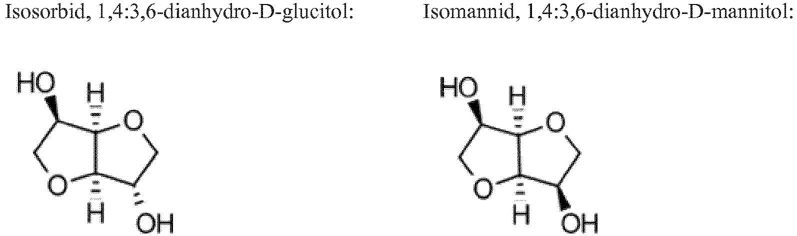

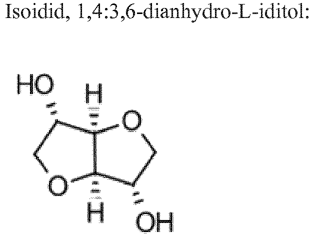

Besonders bevorzugt ist das Isosorbid. Isosorbid ist beispielsweise als Polysorb® P von der Firma Roquette oder als Addolink® 0312 von der Firma Rhein Chemie erhältlich. Es können auch Gemische aus den vorgenannten Verbindungen verwendet werden.

Als latente Katalysatoren D) werden bevorzugt Katalysatoren eingesetzt, die im Bereich zwischen 50°C und 100°C katalytisch aktiv sind. Typische latente Katalysatoren sind beispielsweise blockierte Amin- und Amidin-Katalysatoren der Hersteller Air Products (wie z.B. Polycat® SA-1/10, Dabco KTM 60) und Tosoh Corporation (wie z.B. Toyocat® DB 2, DB 30, DB 31, DB 40, DB 41, DB 42, DB 60, DB 70). Es können aber auch alle weiteren, typischen latenten Katalysatoren aus der Polyurethanchemie mit einer sogenannten Schalttemperatur von 50°C bis 100°C eingesetzt werden.

Gegebenenfalls können Hilfs- und/oder Zusatzstoffe (Additive) E) zugesetzt werden. Hierbei handelt es sich beispielsweise um Entlüfter, Entschäumer, Trennmittel, Füllstoffe, Fließhilfen, organische oder anorganische Farbstoffe, Treibmittel und Verstärkungsstoffe. Weitere bekannte Additive und Zusatzmittel können bei Bedarf verwendet werden. Polyepoxide werden nicht eingesetzt.

Als Fasermaterial für die flächige Faserschicht können geschlichtete oder ungeschlichtete Fasern, beispielsweise Glasfasern, Kohlefasern, Metallfasern (z.B. Stahl- bzw. Eisenfasern), Naturfasern, Aramidfasern, Polyethylenfasern, Basaltfasern oder Carbon Nanotubes (CNTs) eingesetzt werden. Besonders bevorzugt sind Kohlefasern. Die Fasern können als Kurzfasern mit einer Länge von 0,1 bis 50 mm verwendet werden. Bevorzugt sind endlosfaserverstärkte Verbundbauteile durch den Einsatz von kontinuierlichen Fasern. Die Fasern in der Faserschicht können unidirektional, regellos verteilt oder verwoben angeordnet sein. In Bauteilen mit einer Faserschicht aus mehreren Lagen besteht die Möglichkeit der Faserorientierung von Lage zu Lage. Hierbei kann man unidirektionale Faserschichten, Kreuzverbundschichten oder multidirektionale Faserschichten herstellen, wobei unidirektionale oder verwebte Lagen übereinander geschichtet werden. Besonders bevorzugt sind Faser-Halbzeuge als Fasermaterial, wie beispielsweise Gewebe, Gelege, Geflechte, Matten, Vliese, Gestricke und Gewirke oder 3D-Faser-Halbzeuge.

Die Erfindung soll anhand der nachfolgenden Beispiele näher erläutert werden.

### Beispiele

Es wurden lagerstabile Prepregs aus den erfindungsgemäßen Systemen aus unblockierten Polyisocyanaten, Polyolen, Additiven und latenten Katalysatoren hergestellt und anschließend zu einem Faserverbundbauteil ausgehärtet und mit Prepregs/Verbundbauteilen aus Polyurethansystemen aus intern blockiertem Polyisocyanat und Polyol verglichen. Für die Herstellung des Prepregs durch Imprägnieren wurde ein dünner Film des Polyurethansystems auf das Glasfasergewebe aufgetragen und auf der Oberfläche verteilt, so dass ein Glasfasergehalt von etwa 55 Gewichts-%, bezogen auf das spätere Bauteil, erreicht wurde. Anschließend wurden die Prepregs in einem Vakuumbeutel verpackt und bei -18°C gelagert. Die Prepregs wurden aus dem Beutel genommen und anschließend bei 130°C und 5 bar innerhalb von fünf Minuten zu einem Faserverbundbauteil verpresst. Der Glasfasergehalt wurde durch Veraschung der Probenkörper nach DIN EN ISO 1172 bestimmt.

Das NCO/OH Verhältnis gibt das Verhältnis der Anzahl der NCO-Gruppen in der Polyisocyanatkomponente A) zu der Anzahl der OH-Gruppen in den Komponenten B) und C) an.

### Verwendete Ausgangsverbindungen:

Komponente A): Desmodur® XP 2489 (unblockiertes Polyisocyanat der Firma Bayer MaterialScience AG; Gemisch von Isophorondiisocyanat und Hexamethylen-1,6-diisocyanat; NCO-Gehalt 21 Gew.-%; Viskosität bei 25 °C: 29500 mPas)
Komponente A'): Desmodur® VP.PU 60RE11 (unblockiertes Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas)
Komponente B): linearer Polyesterpolyol aus Adipinsäure, Ethylenglycol und 1,4-Butandiol, Hydroxylzahl 86 mg KOH/g und Funktionalität 2, Viskosität bei 25°C: 250±50 mPas
Komponente C): Isosorbid (Addolink® 0312 der Firma Rhein Chemie, Hydroxylzahl 768 mg KOH/g, Schmelzpunkt 60°C bis 63°C)
Komponente D): Toyocat® DB 40: latenter Katalysator (blockiertes Amin) der Firma TOSOH Corporation
Komponente E): internes Trennmittel Edenor® Ti 05 der Firma Cognis Deutschland, Säurezahl 200 mg KOH/g, Funktionalität 1
Glasfasergewebe: HPT 1040-E0/3AC11, 90°/0° der Firma SGL KÜMPERS GmbH & Co. KG, Flächengewicht 1036 g/m²

### Verwendete Messgeräte und Normen:

DSC: Messgerät DSC Q 20 V24.8 Build 120 der Fa. Texas Instruments
DIN EN ISO 53765-A-20: A-20 = Bestimmung des Glasübergangspunktes mit einer Temperaturänderung von 20 Kelvin/Sekunde
Geltimer: Gardco von Fa. Paul N. Gardner, Model GT-SHP-220; Ermittlung der offenen Topfzeit: Mittels dieses Gerätes wird die offene Topfzeit des Harzes ermittelt. Das Gerät besteht aus einem Rührer, der durch einen elektrischen Motor angetrieben wird. Sobald das im Gerät hinterlegte maximale Drehmoment (das Harz liegt nun hochviskos bzw. fest vor) erreicht wird, stoppt der Motor, und die Gelzeit kann am Gerät abgelesen werden.
Viskosimeter: MCR 501 der Fa. Anton Paar
DIN EN ISO 53019 (d/dt = 60 l/s): d/dt = Scherrate
DIN EN ISO 14896:2009-07-Verfahren A: Verfahren A = NCO-Wertbestimmung mittels Titration

### Beispiel 1:

10,4 g Komponente C) wurden mit 20,9 g Komponente B), 1,5 g Toyocat® DB 40 und 0,32 g der Komponente E) bei 70 °C vermischt. Anschließend wurden 59,1 g Desmodur® XP 2489 bei 40 °C zugegeben und mit einem Speedmixer homogenisiert. Danach wurde ein dünner Film dieses Gemisches auf ein Glasfasergewebe aufgetragen, auf der Oberfläche verteilt und anschließend bei -18°C gelagert. Der NCO-Wert des Prepregs lag nach 24 Stunden bei 11,5 %. Das Prepreg wurde anschließend bei 130°C und 5 bar zu einem Faserverbundbauteil verpresst.

### Beispiel 2:

10,4 g Komponente C) wurden mit 20,9 g Komponente B), 1,5 g Toyocat® DB 40 und 0,32 g der Komponente E) bei 70 °C vermischt. Anschließend wurden 109,5 g Desmodur® XP 2489 bei 40 °C zugegeben und mit einem Speedmixer homogenisiert. Danach wurde ein dünner Film dieses Gemisches auf ein Glasfasergewebe aufgetragen, auf der Oberfläche verteilt und anschließend bei -18°C gelagert. Der NCO-Wert des Prepregs lag nach 24 Stunden bei 15,6%. Das Prepreg wurde anschließend bei 130°C und 5 bar zu einem Faserverbundbauteil verpresst.

### Vergleichsbeispiel 3:

21,3 g Komponente C) wurden mit 42,5 g Komponente B), 1,5 g Toyocat® DB 40 und 0,66 g der Komponente E) bei 70 °C vermischt. Anschließend wurden 137,5 g Desmodur® VP.PU 60RE11 Raumtemperatur zugegeben und mit einem Speedmixer homogenisiert. Danach wurde ein dünner Film dieses Gemisches auf ein Glasfasergewebe aufgetragen und auf der Oberfläche verteilt und anschließend bei Raumtemperatur gelagert. Der NCO-Wert des Prepregs lag nach 24 Stunden bei 14,8 %. Das Prepreg wurde anschließend bei 130 °C und 5 bar zu einem Faserverbundbauteil verpresst.

### Vergleichsbeispiel 4:

21,3 g Komponente C) wurden mit 42,5 g Komponente B), 1,5 g Toyocat® DB 40 und 0,66 g der Komponente E) bei 70 °C vermischt. Anschließend wurden 75,0 g Desmodur® VP.PU 60RE11 bei Raumtemperatur zugegeben und mit einem Speedmixer homogenisiert. Da bereits 10 Sekunden nach der Zugabe des Isocyanates Desmodur® VP.PU 60RE11 zur der Mischung aus Komponente C, B, D und E das Reaktionsgemisch komplett ausgehärtet vorlag, konnten keine Glasfasern getränkt bzw. kein Prepreg hergestellt werden.

**Tabelle 1**

| **Beispiele** | **Beispiel 1** | **Beispiel 2** | **Vergleichsbeispiel 3** | **Vergleichsbeispiel 4** | **Daten aus** DE-A 10 2010029355**, Beispiel** |
|---|---|---|---|---|---|
| NCO/OH Äquivalentverhältnis | 1,6:1 | 2,95:1 | 2,95:1 | 1,6:1 | 1:1 |
| offene Topfzeit bei Raumtemperatur | 210 min. | 216 min. | 1 min. 25 sec. | 10 sec. | Komponenten in fester Form |
| Viskosität bei 40 °C (direkt nach dem Vermischen) in [mPas]; nach DIN EN ISO 53019 (d/dt = 60 l/s) | ca. 2800 mPas | ca. 3400 mPas | ca. 10 mPas | nicht messbar, da nach 10 sec fest | keine homogene Schmelze, da Schmelzpun kt von Fineplus® PE 8078 bei >60°C |
| Lagerfähigkeit des Prepregs [nach Tagen]; gemessen anhand der Glasübergangstemperatur T_{g} in [°C] nach DIN EN ISO 53765-A-20 | nach 7 Tagen: -29°C | nach 7 Tagen: -45°C | nach 7 Tagen: -21°C | | nach 2 Tagen: 50°C |
| | nach 14 Tagen: -28°C | nach 14 Tagen: -45°C | nach 14 Tagen: -19°C | | nach 17 Tagen: 55°C |
| | nach 21 Tagen: -22°C | nach 21 Tagen: -45°C | nach 21 Tagen: -9°C | | nach 30 Tagen: 56°C |
| | nach 49 Tagen: -17°C | nach 49 Tagen: -41°C | nach 49 Tagen: 0°C | | nach 47 Tagen: 55°C |
| NCO-Wert des Prepregs [nach Tagen]; gemessen nach DIN EN ISO 14896:2009-07-Verfahren A in [Gew.-%] | nach 1 Tag: 11,5 | nach 1 Tag: 15,8 | nach 1 Tag: 14,8 | | |
| | nach 7 Tagen: 11,3 | nach 7 Tagen: 15,8 | nach 7 Tagen:13,2 | | |
| | nach 14 Tagen: 10,7 | nach 14 Tagen: 15,4 | nach 14 Tagen: 12,9 | | |
| | nach 21 Tagen: 8,2 | nach 28 Tagen: 15,1 | nach 21 Tagen: 12,8 | | |
| | nach 35 Tagen: 8,1 | nach 35 Tagen: 14,1 | nach 35 Tagen: 12,1 | | |
| | nach 49 Tagen: 7,1 | nach 49 Tagen: 13,4 | nach 49 Tagen: 11,7 | | |
| Verfestigungszeit der Prepregs bei erhöhter Temperatur | 5 min bei 125°C | 10 min. bei 125°C | 2 min bei 130°C | | 30 min; die Temperatur wird in dieser Zeit von 90°C auf 170 °C angehoben |
| Glasfasergehalt in [Gew.-%] nach DIN EN ISO 1172 | 48 | 50 | 55 | Keine Tränkung möglich | >50 |
| Lichtechtheit der Polyurethanmatrix | gegeben | gegeben | nicht gegeben | nicht gegeben | gegeben |

Die Lagerstabilität des Prepregs wurde sowohl anhand der Glasübergangstemperatur (T_{g}) mittels DSC-Untersuchungen als auch anhand des NCO-Wertes [in Gew.-%] bestimmt. Aus den Werten aus der Tabelle geht hervor, dass die Vernetzungsfähigkeit des erfindungsgemäßen Prepregs durch die Lagerung bei -18 °C über einen Zeitraum von 7 Wochen nicht beeinträchtigt wurde.

Die Verfestigungszeit ist die Zeit, bei der die Vernetzung der Polyurethanzusammensetzung vollständig ist, so dass keine Reaktionsenthalpie für die Vernetzungsreaktion mehr detektierbar ist.

Das Beispiel 2 zeigt, dass durch eine höhere Kennzahl die offene Topfzeit nur leicht erhöht wird.

Im Vergleichsbeispiel 3 und 4 wurde das im erfindungsgemäßen System aus Beispiel 1 und 2 eingesetzte unblockierte aliphatische Isocyanat Desmodur® XP 2489 gegen das unblockierte aromatische Isocyanat Desmodur® VP.PU 60RE11 ausgetauscht. Hierbei zeigte sich, dass die Reaktionsgeschwindigkeit bei einem NCO/OH Äquivalentverhältnis von 1,6:1 im Falle der aromatischen Basis (Vergleichsbeispiel 4) so hoch ist, das hieraus keine Prepregs hergestellt werden konnten.

## Patentansprüche

1. Prepreg enthaltend eine flächige Faserschicht, die mit nicht vollständig ausgehärtetem Polyurethan (Matrixmaterial) mit einem NCO-Wert von 3 Gew.-% bis 17 Gew.-% (DIN EN ISO 14896:2009-07-Verfahren A: Verfahren A = NCO-Wertbestimmung mittels Titration) und mit einem T_{g}-Wert von unter 40°C (Glasübergangstemperatur T_{g} gemessen nach DIN EN ISO 53765-A-20) getränkt ist, wobei das Polyurethan erhältlich ist aus einem Reaktionsgemisch bestehend aus einer Isocyanatkomponente aus
A) einem oder mehreren organischen Isocyanaten aus der Gruppe bestehend aus unblockierten aliphatischen oder cycloaliphatischen Di- und Polyisocyanaten, deren polymere Homologen, deren Isocyanuraten sowie Abmischungen daraus,
und einer Polyolformulierung aus
B) einer Polyolkomponente aus einem oder mehreren Polyolen mit einer zahlenmittleren OH-Zahl von 30 bis 1000 mg KOH/g, einer zahlenmittleren Funktionalität von 1,9 bis 2,5,
C) einem oder mehreren Dianhydrohexitolen,
D) einem oder mehreren latenten Katalysatoren, die bei Temperaturen von 50° bis 100°C katalytisch wirksam sind,
E) gegebenenfalls Hilfs- und/oder Zusatzstoffen, ausgenommen Polyepoxide,
wobei das Reaktionsgemisch bei 40 °C eine anfängliche Viskosität von 2300 bis 3200 mPas (gemessen nach DIN EN ISO 53019) aufweist und das Verhältnis der Anzahl der NCO-Gruppen der Komponente A) zu der Anzahl der OH-Gruppen der Komponente B) von 1,3:1 bis 10:1 ist.

2. Flächiges Faserverbundbauteil enthaltend mindestens ein Prepreg gemäß Anspruch 1, wobei das Polyurethan vollständig ausgehärtet ist.

3. Flächiges Faserverbundbauteil gemäß Anspruch 2, wobei das Bauteil zusätzlich eine Prepregschicht aufweist, die aus einer flächigen Faserschicht und einem vollständig ausgehärteten Polyurethan auf Basis von aromatischen Isocyanaten besteht.

4. Verfahren zur Herstellung des Prepregs gemäß Anspruch 1, **dadurch gekennzeichnet, dass**
i) die Komponenten B) bis E) bei Temperaturen von 40° bis 80°C, vorzugsweise von 50° bis 70°C, zur Herstellung einer Polyolformulierung X gemischt werden,
ii) die Polyolformulierung X aus Schritt i) mit der Komponente A) bei Temperaturen zwischen 10° und 80°C zur Herstellung einer Reaktivmischung vermischt wird,
iii) die Reaktivmischung aus ii) auf eine flächige Faserschicht aufgetragen wird und teilweise härtet.

5. Verfahren zur Herstellung des Faserverbundbauteils gemäß Anspruch 2 oder 3, **dadurch gekennzeichnet, dass**
ein oder mehrere nach Anspruch 3 hergestellte Prepregs bei 110° bis 140°C und einem Druck von 1 bis 100 bar oder unter Vakuum innerhalb von 1 bis 10 Minuten vollständig ausgehärtet werden.

6. Verwendung des Prepregs gemäß Anspruch 1 und des Faserverbundbauteils gemäß Anspruch 2 zur Herstellung von Sandwichbauteilen, welche aus Kernlagen und Deckschichten bestehen, für Leichtbaulösungen in unterschiedlichen Anwendungen im Bereich der Bau-, der Automobil-(z.B. Karosseriebauteile), der Luft- und Raumfahrtindustrie (z.B. Flugzeugbau), des Straßenbaus (z.B. Kanaldeckel), der Energietechnik (z.B. Rotorblätter von Windkraftanlagen, Solarspiegeln), im Boots- und Schiffsbau und in hochbelasteten Strukturen.

## Claims

1. Prepreg comprising a sheet-like fiber layer saturated with polyurethane (matrix material) that has not been fully hardened and that has an NCO value of from 3% by weight to 17% by weight (DIN EN ISO 14896:2009-07 - method A: method A = NCO value determined by titration), and that has a T_{g}-value below 40°C (glass transition temperature T_{g} measured in accordance with DIN EN ISO 53765-A-20), where the polyurethane is obtainable from a reaction mixture composed of an isocyanate component made of
A) one or more organic isocyanates from the group consisting of unblocked aliphatic or cycloaliphatic di- and polyisocyanates, polymeric homologs of these, isocyanurates of these and also blends thereof,
and a polyol formulation of
B) a polyol component made of one or more polyols with a number-average OH number of from 30 to 1000 mg KOH/g, with a number-average functionality of from 1.9 to 2.5,
C) one or more dianhydrohexitols,
D) one or more latent catalysts which are catalytically active at temperatures of from 50° to 100°C,
E) optionally auxiliaries and/or additives, other than polyepoxides,
where the initial viscosity of the reaction mixture at 40°C is from 2300 to 3200 mPas (measured in accordance with DIN EN ISO 53019), and the ratio of the number of the NCO groups in component A) to the number of the OH groups in component B) is from 1.3:1 to 10:1.

2. Sheet-like fiber-composite component comprising at least one prepreg according to Claim 1, where the polyurethane has been fully hardened.

3. Sheet-like fiber-composite component according to Claim 2, where the component additionally has a prepreg layer which is composed of a sheet-like fiber layer and of a fully hardened polyurethane based on aromatic isocyanates.

4. Process for the production of the prepreg according to Claim 1, **characterized in that**
i) components B) to E) are mixed at temperatures from 40° to 80°C, preferably from 50° to 70°C, to produce a polyol formulation X,
ii) the polyol formulation X from step i) is mixed with component A) at temperatures from 10° to 80°C to produce a reactive mixture,
iii) the reactive mixture from ii) is applied to a sheet-like fiber layer and to some extent cured.

5. Process for the production of the fiber-composite component according to Claim 2 or 3, **characterized in that**
one or more prepregs produced according to Claim 3 is/are fully hardened at from 110° to 140°C and at a pressure of from 1 to 100 bar or in vacuo within from 1 to 10 minutes.

6. Use of the prepreg according to Claim 1 and of the fiber-composite component according to Claim 2 for the production of sandwich components which are composed of core sublayers and of outer layers, for lightweight construction solutions in various applications in the construction industry, the automobile industry (e.g. bodywork components), the aerospace industry (e.g. aircraft construction), road construction (e.g. manhole covers), power engineering (e.g. rotor blades of wind turbines, solar reflectors), in boatbuilding and shipbuilding, and in structures exposed to high loads.

## Revendications

1. Préimprégné contenant une couche fibreuse plate, qui est imprégnée avec un polyuréthane non entièrement durci (matériau de matrice) ayant une valeur NCO de 3 % en poids à 17 % en poids (DIN EN ISO 14896:2009-07-procédé A : procédé A = détermination de la valeur NCO par titrage) et ayant une valeur de T_{g} inférieure à 40 °C (température de transition vitreuse T_{g} mesurée selon DIN EN ISO 53765-A-20), le polyuréthane pouvant être obtenu à partir d'un mélange réactionnel constitué par un composant isocyanate constitué par :
A) un ou plusieurs isocyanates organiques du groupe constitué par les di- et polyisocyanates aliphatiques ou cycloaliphatiques non bloqués, leurs homologues polymères, leurs isocyanurates et leurs mélanges,
et par une formulation de polyol constituée par :
B) un composant polyol constitué par un ou plusieurs polyols ayant un indice OH moyen en nombre de 30 à 1 000 mg KOH/g, une fonctionnalité moyenne en nombre de 1,9 à 2,5,
C) un ou plusieurs dianhydrohexitols,
D) un ou plusieurs catalyseurs latents, qui sont catalytiquement actifs à des températures de 50 à 100 °C,
E) éventuellement des adjuvants et/ou des additifs, à l'exception des polyépoxydes,
le mélange réactionnel présentant à 40 °C une viscosité initiale de 2 300 à 3 200 mPas (mesurée selon DIN EN ISO 53019) et le rapport entre le nombre de groupes NCO du composant A) et le nombre de groupes OH du composant B) étant de 1,3:1 à 10:1.

2. Composant composite fibreux plat contenant au moins un préimprégné selon la revendication 1, dans lequel le polyuréthane est entièrement durci.

3. Composant composite fibreux plat selon la revendication 2, dans lequel le composant comprend en outre une couche de préimprégné qui est constituée par une couche fibreuses plate et un polyuréthane entièrement durci à base d'isocyanates aromatiques.

4. Procédé de fabrication du préimprégné selon la revendication 1, **caractérisé en ce que**
i) les composants B) à E) sont mélangés à des températures de 40 à 80 °C, de préférence de 50 à 70 °C, pour la fabrication d'une formulation de polyol X,
ii) la formulation de polyol X de l'étape i) est mélangée avec le composant A) à des températures comprises entre 10 et 80 °C pour la fabrication d'un mélange réactif,
iii) le mélange réactif de ii) est appliqué sur une couche fibreuse plate et partiellement durci.

5. Procédé de fabrication du composant composite fibreux selon la revendication 2 ou 3, **caractérisé en ce qu'**un ou plusieurs préimprégnés fabriqués selon la revendication 3 sont entièrement durcis à une température de 110 à 140 °C et à une pression de 1 à 100 bar ou sous vide en 1 à 10 minutes.

6. Utilisation du préimprégné selon la revendication 1 et du composant composite fibreux selon la revendication 2 pour la fabrication de composants en sandwich, qui sont constitués par des couches de noyau et des couches de recouvrement, pour des solutions de construction légère dans différentes applications dans le domaine du bâtiment, de l'industrie automobile (p. ex. composants de carrosserie), de l'industrie aéronautique et aérospatiale (p. ex. construction d'aéronefs), de la construction routière (p. ex. regards d'égout), de la technologie énergétique (p. ex. pales de rotor d'éoliennes, réflecteurs solaires), dans la construction de bateaux et de navires et dans des structures hautement sollicitées.
